# EUROPÄISCHE PATENTSCHRIFT

(11) **EP 3 716 471 B1**
(45) Veröffentlichungstag und Bekanntmachung des Hinweises auf die Patenterteilung: **03.09.2025**
(21) Anmeldenummer: 20164840.9
(22) Anmeldetag: 20.09.2016
(51) Int. Cl.: H02S 30/20, H02S 20/30, F24S 20/50

(54) **SCHWENK- UND FÄCHERANTRIEB FÜR SOLARPANEELE**
PIVOTING AND COMPARTMENT DRIVE FOR SOLAR PANELS
ENTRAÎNEMENT À PIVOTEMENT ET DÉPLOIEMENT POUR PANNEAUX SOLAIRES

(30) Priorität: 02.10.2015 AT 508402015
(43) Veröffentlichungstag der Anmeldung: 30.09.2020
(62) Teilanmeldung aus: 16793730.9
(73) Patentinhaber: SFS Acquisition, LLC., Boston, MA 02116 (US)
(72) Erfinder: Stöger, Elmar, 2822 Bad Erlach (AT); Swatek, Alexander, 7540 Güssing (AT); Zach, Gerald, 1220 Wien (AT)
(74) Vertreter: Hoffmann Eitle

(56) Entgegenhaltungen:
- WO-A1-2011/134004
- WO-A1-2012/073705
- AT-A4- 509 886
- ES-A1- 473 356
- KR-A- 20090 037 100
- US-A1- 2015 059 825

## Beschreibung

Die vorliegende Erfindung betrifft einen Schwenk- und Fächerantrieb für Solarpaneele, mit einem Grundträger, einem Drehteller, der auf dem Grundträger um eine im Wesentlichen vertikale erste Achse schwenkbar gelagert ist, einer Schwenkplatte, die um eine im Wesentlichen horizontale zweite Achse schwenkbar gelagert ist, und einer Fächerwelle, die auf der Schwenkplatte um eine dritte Achse schwenkbar gelagert ist und auf der die Solarpaneele um die genannte dritte Achse ein- und auffächerbar lagerbar sind.

Solarpaneele, die mittels eines derartigen Antriebs auffächerbar und dem Sonnenstand nachführbar sind, sind beispielsweise aus der AT 509.886 B1, AT 512.680 B1 und AT 513.875 B1 derselben Anmelderin bekannt. Die Solarpaneele können dabei durch Verdrehen der Fächerwelle, auf der sie gelagert sind, von einer geschützten Stellung, in der sie im Wesentlichen deckungsgleich gestapelt übereinanderliegen, in eine aufgefächerte Betriebsstellung aufgefächert werden und umgekehrt. Dazu ist das oberste (oder unterste) Solarpaneel des Stapels drehfest mit der Fächerwelle verbunden, während die restlichen Solarpaneele auf der Fächerwelle drehbeweglich sind, und schleppt über Mitnehmer das jeweils nächste Solarpaneel - und dieses wiederum das nächste Solarpaneel usw. usf. - beim Auf- und Einfächern mit. In der aufgefächerten Betriebsstellung können die Solarpaneele durch Verschwenken des Drehtellers und der Schwenkplatte in Azimut- und Elevationswinkel auf die Sonne ausgerichtet werden. US 2015/059825 A1 offenbart ein Solarmodul mit einem drehbaren Basisträger, der um eine vertikale Achse schwenkbar ist, sowie zwei Trägerarmen, an denen Solarpaneele montiert sind, die zwischen einer gestapelten und einer aufgefächerten Position bewegt werden können. Das System verfügt über einen elektrischen Antrieb zur Drehung des Basisträgers und eine automatische Sonnenverfolgung, jedoch fehlt eine Steuerung, die das Auffächern der Paneele selektiv mit der Drehbewegung des Basisträgers koppelt. Ein Kupplungsmechanismus zur gezielten Synchronisation von Rotation und Fächerbewegung ist nicht offenbart.

Die Erfindung setzt sich zum Ziel, einen Schwenk- und Fächerantrieb für derartige Solarpaneele zu schaffen, welcher einfacher aufgebaut, platzsparender und weniger störungsanfällig ist als die bekannten Konstruktionen.

Dieses Ziel wird mit einem Schwenk- und Fächerantrieb mit den Merkmalen des Patentanspruchs 1 erreicht.

Optionale Merkmale des Schwenk- und Fächerantriebs sind in den abhängigen Patentansprüchen wiedergegeben.

In einer Ausführungsform führt der Aufbau eines Kurbelschwingengetriebes aus Drehteller, Schwenkplatte, Kurbel und Pleuel zu einer sehr kompakten, platzsparenden Konstruktion, bei welcher die Schwenkplatte in eine Ruhestellung, z.B. zu Schutzzwecken, eingeschwenkt werden kann, in der sie im Wesentlichen parallel zu und über dem Drehteller liegen kann. Zu Transportzwecken kann die Schwenkplatte in eine etwa vertikale Endstellung ausgeschwenkt werden, in welcher Kurbel und Pleuel bevorzugt im Wesentlichen gestreckt sind. Dadurch wirken Kräfte, z.B. infolge von auf den Fächerkopf einwirkenden Stößen, auf die Achslager und nicht auf empfindlichere Getriebeteile an der Kurbelachse. Gleichzeitig benötigt dies nur sehr wenige Teile, nämlich Kurbel und Pleuel, um das Schwenkgetriebe für die Schwenkplatte aufzubauen, was die Fertigung vereinfacht. Die Verwendung eines Kurbelschwingengetriebes für die Schwenkplatte führt auch zu einem überaus störungsunanfälligen Betrieb, da die Kurbel voll drehfähig bleibt und somit ein versehentliches Überdrehen eines sie antreibenden Motors zu keinerlei Blockierung oder Beschädigung des Motors oder Mechanismus führen kann.

Bevorzugt liegt die Lagerachse der Kurbel am Drehteller tiefer als die zweite Achse, was bei entsprechender Dimensionierung von Kurbel, Pleuel und wirksamen Gelenkabständen von Drehteller und Schwenkplatte dazu verwendet werden kann, die Schwenkplatte beispielsweise von einer horizontalen Ruhestellung über beliebige Schrägstellungen bis zu einer aufrechten Endstellung zu verschwenken, damit sie dem Sonnenstand folgen kann.

Eine besonders robuste und platzsparende Ausführung ergibt sich, wenn gemäß einem bevorzugten Merkmal der Erfindung der Drehteller zwei hochragende Lagerarme aufweist, zwischen welchen das genannte eine Ende der Schwenkplatte gelagert ist. Aus denselben Gründen können bevorzugt zwei Kurbeln mit je einem Pleuel vorgesehen sein, zwischen welchen das genannte andere Ende der Schwenkplatte gelagert ist.

In einer vorteilhaften Ausführungsform können dabei die Kurbeln auf einer gemeinsamen Welle sitzen, die in Lagerlaschen des Drehtellers gelagert ist, so dass nur ein Antrieb für beide Kurbeln erforderlich ist. Dabei kann insbesondere der Drehteller - gegebenenfalls mit Lagerarmen und Lagerlaschen, falls vorhanden - einstückig gefertigt sein, bevorzugt als ein Gussteil, was die Endmontage des Antriebs in der Fertigung wesentlich vereinfacht.

Der Schwenk- und Fächerantrieb der Erfindung kann manuell betätigt werden. Bevorzugt ist er jedoch für einen Motorbetrieb ausgelegt, u.zw. sowohl für eine vollautomatische Sonnenstandsnachführung der Solarpaneele als auch deren vollautomatisches Ein- und Auffächern, beispielsweise um sie in der Nacht oder bei Wind und Regen in eine geschützte eingefächerte Stellung zu verbringen.

Die Schwenkbewegungen um die genannten drei Achsen können dazu mittels jeglicher in der Technik bekannter Antriebe bewerkstelligt werden, beispielsweise hydraulischer oder pneumatischer Antriebe oder elektrischer Stellmotoren, z.B. langsamdrehender oder getriebeuntersetzter Elektromotoren oder Schrittschaltmotoren. Als Getriebe kommen dabei die in der Technik bekannten Getriebe, z.B. Planetengetriebe, auch als Winkelgetriebe, z.B. Planetenumlenkgetriebe, in Frage.

In bevorzugten Ausführungsformen der Erfindung werden Elektromotoren mit untersetzenden Schneckengetrieben verwendet, d.h. die Kurbel(n) werden bevorzugt über ein erstes Schneckengetriebe von einem am Drehteller montierten ersten Elektromotor angetrieben; und/oder der Drehteller über ein zweites Schneckengetriebe von einem am Grundträger montierten zweiten Elektromotor; und/oder die Fächerwelle über ein drittes Schneckengetriebe von einem an der Schwenkplatte montierten dritten Elektromotor.

Gemäß einem weiteren Aspekt der Erfindung wird anstelle eines eigenen dritten Antriebs für die Fächerwelle einer der beiden anderen Antriebe mitverwendet: Durch wahlweises Kuppeln der Fächerwelle mit dem Drehteller oder dessen Antrieb oder mit der Schwenkplatte oder deren Antrieb kann das Auf- und Einfächern der Solarpaneele während der Azimut-Verdrehung des Drehtellers oder Elevations-Verschwenkung der Schwenkplatte bewirkt werden. Nach dem gewünschten Auf- bzw. Einfächern der Solarpaneele wird die Kupplung wieder gelöst, und die Antriebe des Drehtellers und der Schwenkplatte können wieder ausschließlich für die Azimut- und Elevationsverstellung verwendet werden.

Besonders günstig ist es, wenn für den Antrieb der Fächerwelle der Drehtellerantrieb mitverwendet wird, d.h. die Fächerwelle über eine Kupplung vom Drehteller oder dessen Antrieb antreibbar ist, und dabei gleichzeitig die Kupplung automatisch durch das Verschwenken der Schwenkplatte betätigt wird. So kann insbesondere die Kupplung in einer Ruhestellung der Schwenkplatte geschlossen und in einer davon abweichenden Schwenkstellung der Schwenkplatte geöffnet sein. Beispielsweise ist die Ruhestellung der Schwenkplatte deren horizontale, parallel über und deckungsgleich zum Drehteller liegende Stellung, in welcher die Kupplung schließt. Der Drehtellerantrieb kann nun zum Auffächern der Solarpaneele verwendet werden, woraufhin diese mittels des Schwenkantriebs in ihrer Elevation auf die Sonne ausgerichtet werden, was die Kupplung löst und den Drehtellerantrieb wieder ausschließlich für Azimutverstellung nutzbar macht.

Eine vorteilhafte praktische Ausführungsform der Erfindung zeichnet sich dadurch aus, dass die Kupplung durch ein vom Drehteller über eine Getriebewelle angetriebenes Ritzel und einen auf der Fächerwelle sitzenden Zahnkranz gebildet ist, welcher beim Einschwenken der Schwenkplatte in die Ruhestellung in Eingriff mit dem Ritzel und beim Ausschwenken der Schwenkplatte aus der Ruhestellung außer Eingriff kommt. Dies ergibt ein automatisches Ein- und Auskuppeln der Kupplung zwischen Drehtellerantrieb und Fächerwelle beim Verschwenken der Schwenkplatte.

Um zu verhindern, dass sich im Betrieb die Fächerwelle, nachdem die genannte Kupplung zur Separierung der Azimut- und Elevationsantriebe gelöst wurde, unbeabsichtigt verdreht, kann gemäß einem weiteren bevorzugten Merkmal der Erfindung die Fächerwelle über eine weitere Kupplung gegenüber der Schwenkplatte selektiv drehfixiert werden. Auch diese weitere Kupplung kann automatisch bei der Schwenkbewegung der Schwenkplatte betätigt werden, und zwar ist insbesondere die weitere Kupplung in der Ruhestellung der Schwenkplatte geöffnet und in einer davon abweichenden Schwenkstellung der Schwenkplatte geschlossen. In einer bevorzugten Ausführungsform dieser Variante kann dazu die weitere Kupplung eine mit der Fächerwelle drehfeste und gegen eine Bremsfläche der Schwenkplatte federnd vorgespannte Bremsscheibe sein, welche von einem Betätigungsglied des Drehtellers beim Verschwenken der Schwenkplatte in die Ruhestellung von der Bremsfläche distanzierbar ist, was eine störungsunanfällige automatische Betätigung der zweiten Kupplung ermöglicht. Dies kann alternativ auch dadurch bewirkt werden, dass die weitere Kupplung ein an der Schwenkplatte drehfest, aber axialbeweglich federbeaufschlagtes Bremsritzel ist, welches Bremszähne zum kämmenden Eingriff mit dem Zahnkranz hat und beim Verschwenken der Schwenkplatte in die Ruhestellung gegen die Federbeaufschlagung aus dem kämmenden Eingriff drückbar ist.

Die Erfindung wird nachstehend anhand von in den beigeschlossenen Zeichnungen dargestellten Ausführungsbeispielen näher erläutert. In den Zeichnungen zeigen
die Fig. 1 und 2 ein Solarmodul mit auffächerbaren Solarpaneelen in zwei verschiedenen Betriebstellungen jeweils in einer schematischen Perspektivansicht von schräg oben;
die Fig. 3 und 4 einen Schwenk- und Fächerantrieb für das Solarmodul der Fig. 1 und 2 in zwei verschiedenen Betriebsstellungen, und zwar einmal in einer Perspektivansicht von schräg oben (Fig. 3) und einmal in einer Perspektivansicht von schräg unten (Fig. 4);
die Fig. 5 bis 7 den Schwenk- und Fächerantrieb der Fig. 3 und 4 in einer Seitenansicht (Fig. 5), einer Draufsicht (Fig. 6) und einer Rückansicht (Fig. 7); und
die Fig. 8 bis 11 zwei Varianten einer Ausführungsform des Schwenk- und Fächerantriebs der Fig. 3 bis 7 jeweils in zwei verschiedenen Betriebsstellungen im Schnitt.

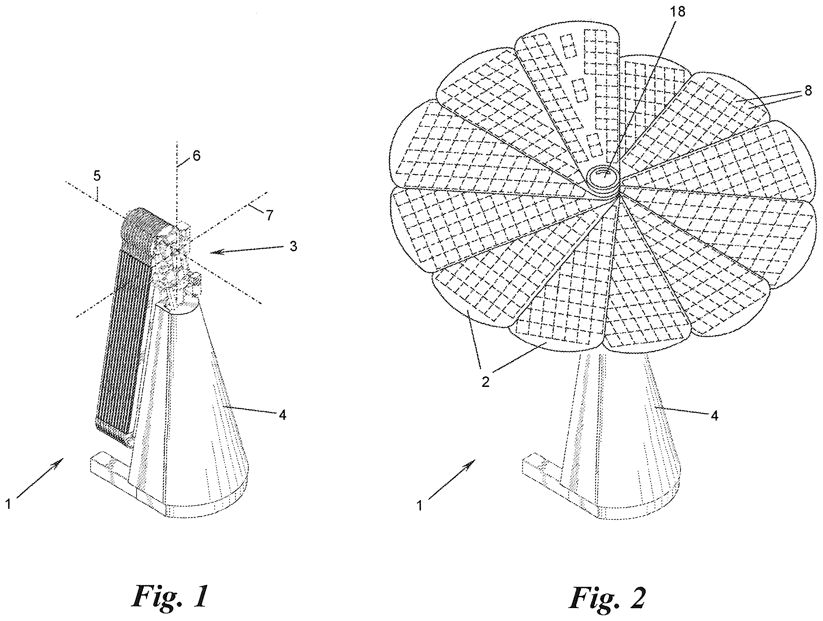

In der Fig. 1 und 2 ist ein Solarmodul 1 mit einer Vielzahl von lamellenförmigen Solarpaneelen 2 gezeigt, die über einen Schwenk- und Fächerantrieb 3 an einer Verankerung 4 schwenk- und auffächerbar gelagert sind. Die Solarpaneele 2 können so von einer ersten, in Fig. 1 gezeigten eingefächerten Stellung, in der sie im Wesentlichen deckungsgleich in einem Stapel übereinanderliegen, in eine zweite, in Fig. 2 gezeigte aufgefächerte Stellung, in welcher sie um eine gemeinsame Auffächerachse 5 herum aufgefächert sind und damit im Wesentlichen nebeneinanderliegen, verbracht werden und umgekehrt. Mit Hilfe des Schwenk- und Fächerantriebs 3 kann dabei die Auffächerachse 5 um eine erste, im Wesentlichen vertikale Achse 6 in Azimut und um eine zweite, im wesentliche horizontale Achse 7 in Elevation verstellt werden, um die aufgefächerten Solarpaneele 2 auf die Sonne auszurichten und dieser nachzuführen. Die Verankerung 4 kann dabei von jeglicher Art sein, beispielsweise ein Ständer bzw. Stativ wie gezeigt, aber auch ein Gebäudeteil, eine Bodenverankerung, ein Schiffsteil, ein Fahrzeug, ein Container oder dgl.

Die Solarpaneele 2 besitzen etwa Kreissektorform, bevorzugt mit abgerundeten Ecken (''Blütenblattform") wie dargestellt, und ergänzen sich in ihrer aufgefächerten Stellung (Fig. 2) bevorzugt - wenn auch nicht zwingend - zu einem Vollkreis. Beispielsweise sind zwölf Solarpaneele 2 vorgesehen, deren Kreissektorwinkel jeweils ca. 30° beträgt, wobei der Auffächer- bzw. Verschwenkwinkel eines Solarpaneels 2 gegenüber seinem benachbarten Solarpaneel 2 dementsprechend etwa 30° beträgt.

Jedes Solarpaneel 2 weist auf seiner Oberseite ein flächiges Array von photovoltaischen Zellen 8 auf, z.B. in kristalliner oder organischer Form oder in Dünnschichttechnologie. Die elektrischen Anschlüsse und Verschaltungen der Solarpaneele 2 und Solarzellen 8 sind zwecks Übersichtlichkeit nicht gezeigt; beispielsweise werden die Solarpaneele 2 über flexible Anschlusskabel oder Schleifkontakte und starre Kontaktringe an der Verankerung 4 bzw. dem Schwenk- und Fächerantrieb 3 kontaktiert und an die weitere Energieübertragungselektrik angeschlossen.

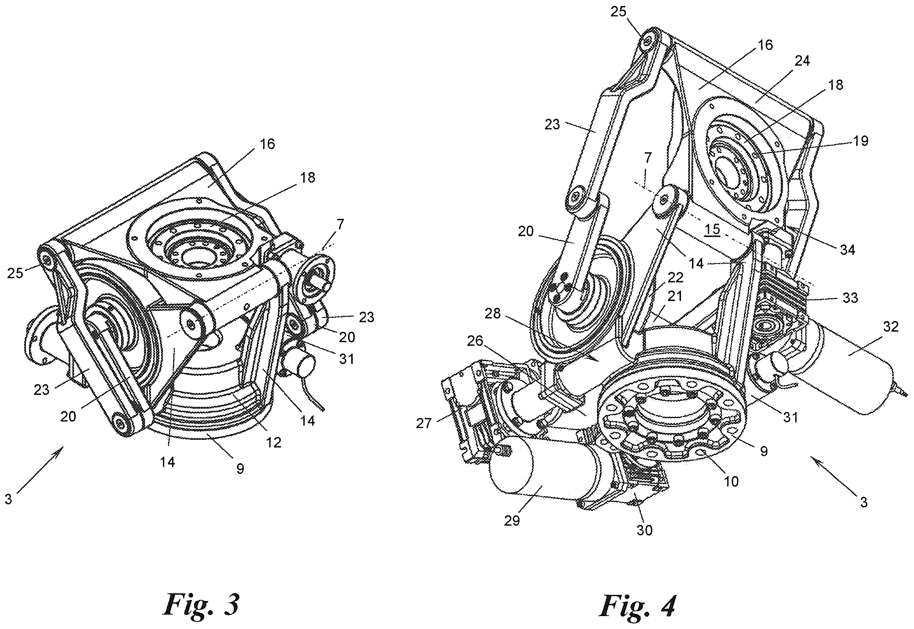

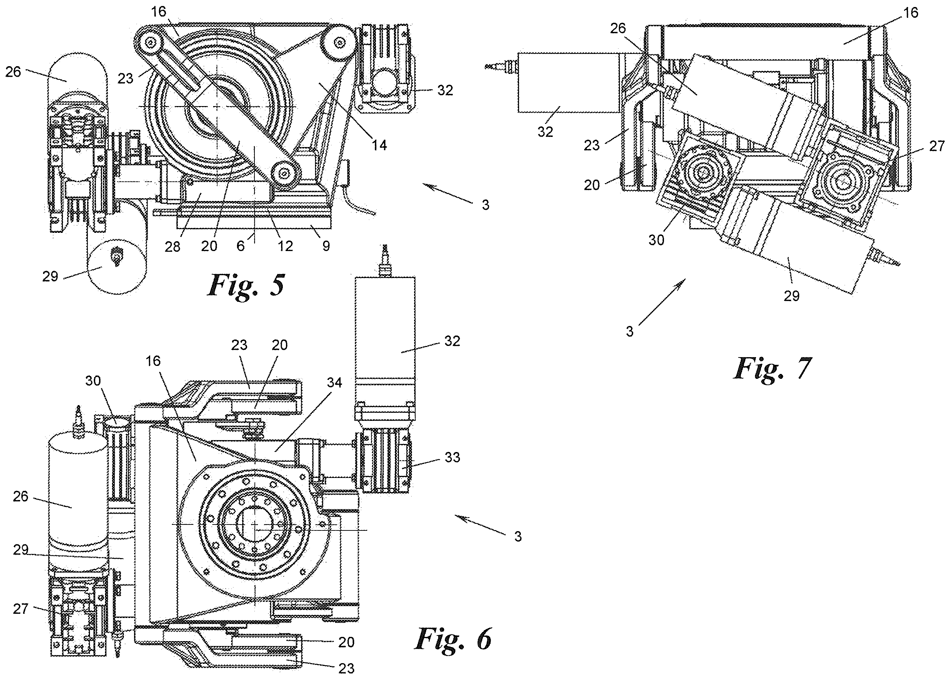

Die Fig. 3 bis 9 zeigen den Schwenk- und Fächerantrieb 3 für die Solarpaneele 2 im Detail. Der Schwenk- und Fächerantrieb 3 umfasst einen Grundträger 9, hier in Form eines Ringflansches, der beispielsweise über Bohrungen 10 auf das obere Ende der Verankerung 4 geschraubt werden kann. Auf dem Grundträger 9 ist über ein Kugellager 11 ein Drehteller 12 um die Achse 6 zumindest schwenkbar, bevorzugt voll drehbar, gelagert.

Der Drehteller 12 besitzt an seinem einen Ende 13 zwei schräg nach oben hochragende und voneinander beabstandete Lagerarme 14, zwischen denen das eine Ende 15 einer Schwenkplatte 16 um die Achse 7 schwenkbar gelagert ist. Die Schwenkplatte 16 könnte auch auf andere Weise am Drehteller 12 schwenkbar gelagert sein, beispielsweise mit Hilfe eines Scharniers. Es ist hervorzuheben, dass sich die Begriffe "Drehteller" und "Schwenkplatte" nicht wörtlich auf eine Teller- bzw. Plattenform beziehen, sondern auf deren Funktion, d.h. der Drehteller 12 könnte auch eine andere als Tellerform haben, beispielsweise in Form einer Nabe, eines Wellenstutzens, eines Blocks usw.; und die Schwenkplatte 16 könnte auch eine andere Form als eine Plattenform haben, z.B. eine Nabe, ein Stutzen, ein Block oder ein beliebig geformter Träger sein.

Auf bzw. in der Schwenkplatte 16 ist über ein Kugellager 17 eine Fächerwelle 18 um die Auffächerachse 5 zumindest schwenkbar, bevorzugt voll drehbar, gelagert. Von der Fächerwelle 18 ist in den Fig. 3 bis 9 nur ihr antriebsseitiger, als Ringflansch ausgebildeter Endteil dargestellt, an welchen beispielsweise über Bohrungen 19 der restliche, in Fig. 2 erkennbare Teil der Fächerwelle 18 angeflanscht werden kann, der die Solarpaneele 2 trägt. Durch Verdrehen der Fächerwelle 18 können die Solarpaneele 2 von der eingefächerten Stellung (Fig. 1) in die aufgefächerte Stellung (Fig. 2) verbracht werden und umgekehrt. Dazu kann z.B. das oberste (oder unterste) Solarpaneel 2 des Stapels (Fig. 1) mit der Fächerwelle 18 drehfest verbunden werden und das unterste (oder oberste) Solarpaneel 2 mit der Schwenkplatte 16 drehfest verbunden werden, wobei jeweils eines der Solarpaneele 2 mittels Schleppleisten, Schlepphaken, Mitnehmern oder dgl. das benachbarte Solarpaneel 2 beim Auf- oder Einfächern mitschleppt, bis alle Solarpaneele 2 auf- bzw. eingefächert sind.

Das Übereinandergleiten der Solarpaneele 2 bei dieser Schleppbewegung kann für eine Reinigung der Solarpaneele 2 ausgenützt werden. Zu diesem Zweck ist optional jedes Solarpaneel 2 (mit Ausnahme des untersten Solarpaneels 2) auf seiner Rückseite mit einer Kehrlippe ausgestattet, welche beim Auffächern das jeweils darunterliegende Solarpaneel 2 abkehrt. Die Kehrlippe kann beispielsweise eine Gummilippe oder eine Bürstenlippe sein und dabei gleichzeitig die Schleppleiste bilden.

Das Verschwenken der Schwenkplatte 16 gegenüber dem Drehteller 12 erfolgt mit Hilfe zumindest einer (hier: zwei) Kurbeln 20, die auf einer gemeinsamen Welle 21 sitzen, welche in Lagerlaschen 22 des Drehtellers 12 gelagert sind, und zwar so, dass die Achse 21' der Welle 21 parallel zu und in einem Abstand von der Schwenkachse 7 der Schwenkplatte 16 liegt. Die Lagerlaschen 22 können durch die Fußbereiche der Lagerarme 14 oder davon gesondert ausgebildet sein.

Die Kurbeln 20 sind jeweils an ihren der Welle 21 abgewandten Enden über ein Pleuel 23 mit dem dem Ende 15 gegenüberliegenden anderen Ende 24 der Schwenkplatte 16 an einer Anlenkachse 25 gekoppelt.

Die vier Teile Drehteller 12, Schwenkplatte 16, Kurbeln 20 und Pleuel 23 bilden ein Viergelenk-Koppelgetriebe, u.zw. genauer ein Kurbelschwingengetriebe, dessen "Kurbel" die Kurbeln 20, dessen "Schwinge" die Schwenkplatte 16, dessen "Gestell" der Drehteller 2 und dessen "Koppelglied" die Pleuel 23 sind. Die Gestelllänge zwischen Wellenachse 21' und Schwenkachse 7, die Schwingenlänge zwischen Schwenkachse 7 und Anlenkachse 25, sowie die wirksamen Längen der Kurbel 20 und Pleuel 23 bestimmen die Kinematik des Kurbelschwingengetriebes, wie in der Technik bekannt. Die genannten Längen werden bevorzugt - dies ist nicht zwingend - so gewählt, dass die Schwenkplatte 16 eine etwa 90°-Schwenkbewegung von einer etwa horizontalen Ruhestellung (Fig. 3) in eine etwa vertikale Endstellung (Fig. 4) ausführt und zurück, wenn die Kurbeln 20 eine volle Umdrehung ausführen.

Bevorzugt liegt dabei die Wellenachse 21' der Kurbeln 20 schräg unterhalb der Schwenkachse 7, so dass in der Ruhestellung (Fig. 3) die Schwenkplatte 16 etwa parallel zu und über dem Drehteller 12 liegt, wenn die Kurbeln 20 und Pleuel 23 in ihrer maximal verkürzten Stellung sind. Dies hat einen sehr geringen Platzbedarf in der Ruhestellung zur Folge hat, siehe Fig. 3. In der maximal ausgeschwenkten Endstellung von Fig. 4 befinden sich die Kurbeln 20 und Pleuel 23 in ihrer maximal gestreckten Stellung.

Die Bewegungen des Schwenk- und Fächerantriebs 3 um eine oder mehrere der Achsen 5, 6, 7 können im einfachsten Fall manuell vorgenommen werden. Bevorzugt werden die Bewegungen um eine oder mehrere der Achsen 5, 6, 7 jedoch durch entsprechende Antriebe bewerkstelligt, beispielsweise Hydraulik- oder Pneumatikzylinder, Stellmotoren, Schrittschaltmotoren oder dgl. In den Fig. 3 bis 7 ist ein Beispiel gezeigt, in welcher für jede der drei Bewegungen jeweils ein getriebeuntersetzter Elektroantrieb vorgesehen ist.

Dazu ist am Drehteller 12 ein erster Elektromotor 26 mit angeflanschtem Winkelgetriebe 27 montiert, der über ein erstes Schneckengetriebe 28 eine der Kurbeln 20 oder deren Welle 21 antreibt. Das erste Schneckengetriebe 28 umfasst beispielsweise eine vom Elektromotor 26 über das Winkelgetriebe 27 angetriebene Schnecke, die in ein auf einer Kurbel 20 oder der Welle 21 sitzendes Schneckenrad eingreift.

Ein zweiter Elektromotor 29 mit angeflanschtem Winkelgetriebe 30 ist am Grundträger 9 montiert und treibt über ein zweites Schneckengetriebe 31, das beispielsweise eine in ein Schneckenrad des Drehtellers 12 eingreifende Schnecke aufweist, den Drehteller 12 an.

Ein dritter Elektromotor 32 mit angeflanschtem Winkelgetriebe 33 ist an der Schwenkplatte 16 montiert und treibt über ein drittes Schneckengetriebe 34 die Fächerwelle 18 an, beispielsweise wieder mit Hilfe einer Schnecke, die in ein mit der Fächerwelle 18 verbundenes Schneckenrad eingreift.

Es versteht sich, dass anstelle eines oder mehrerer der Schneckengetriebe auch geeignete andere Getriebe, z.B. Stirnrad-, Planeten- oder Winkelgetriebe, wie Kegelrad-, Kronenrad- oder Planetenumlenkgetriebe, u.zw. mit jeweils einer oder mehreren Getriebestufen, eingesetzt werden können.

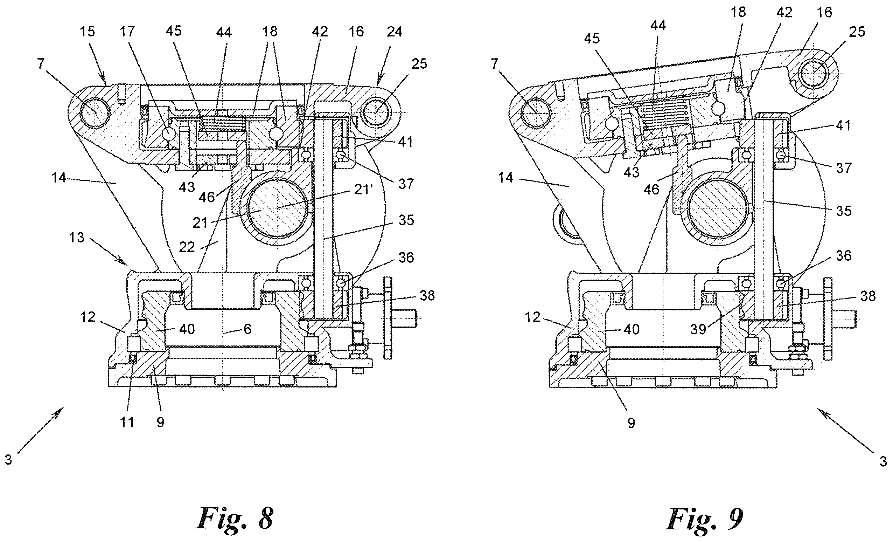

In den Fig. 8 bis 11 sind Varianten einer Ausführungsform für den Antrieb der Fächerwelle 18 gezeigt, und zwar ist für diese kein eigener Elektroantrieb vorgesehen, sondern es wird hierfür der Antrieb des Drehtellers 12 wahlweise mitverwendet. Zu diesem Zweck ist auf dem Drehteller 12 und/oder einer seiner Lagerlaschen 22 eine Getriebewelle 35 mit etwa vertikaler Drehachse in Lagern 36, 37 gelagert. Die Getriebewelle 35 hat an ihrem unteren Ende ein Ritzel 38, das mit einem Zahnkranz 39 kämmt, der am Außenumfang eines Flansches 40 des Grundträgers 9 ausgebildet ist. Bei Drehung des Drehtellers 12 gegenüber dem Grundträger 9 bzw. dessen Flansch 40 wird somit die Getriebewelle 35 in Drehung versetzt.

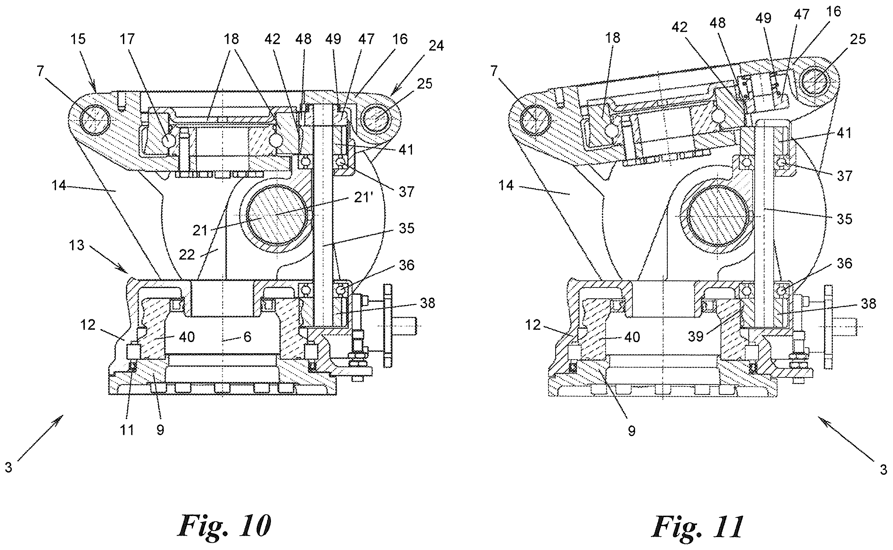

An ihrem oberen Ende trägt die Getriebewelle 35 ein weiteres Ritzel 41, das in der herabgeschwenkten Stellung der Schwenkplatte 16 (Fig. 8 bzw. 10) mit einem Zahnkranz 42 in Eingriff kommt, der am Außenumfang der Fächerwelle 18 ausgebildet ist. In dieser Stellung treibt somit der zweite Elektromotor 29 sowohl den Drehteller 12 als auch - über den Eingriff von Ritzel 41 und Zahnkranz 42 - die Fächerwelle 18 an, so dass während der Drehung um die Achse 6 gleichzeitig die Solarpaneele 2 um die Achse 5 auf- oder eingefächert werden.

Das Ritzel 41 und der Zahnkranz 42 bilden somit eine Kupplung zwischen dem Drehteller 12 bzw. dessen Antrieb und der Fächerwelle 18, die in der in den Fig. 8 und 10 gezeigten Ruhestellung der Schwenkplatte 16 geschlossen ist. Beim Hochschwenken der Schwenkplatte 16 öffnet die Kupplung, siehe die Fig. 9 bzw. 11, d.h. Ritzel 41 und Zahnkranz 42 kommen außer Eingriff, so dass nun der Elektromotor 29 wieder ausschließlich für den Drehantrieb um die Achse 6, d.h. die Azimutverstellung der Solarpaneele 2, verwendet werden kann.

Beim Herabschwenken bzw. Einschwenken der Schwenkplatte 16 in die Ruhestellung (Fig. 8 bzw. 10) wird die Kupplung 41, 42 wieder geschlossen und es kann dann wieder der Elektromotor 29 zum z.B. Einfächern der Solarpaneele 2 mitverwendet werden.

Falls gewünscht, können in der eingefächerten Stellung die gestapelten Solarpaneele 2 durch Drehung um die Schwenkachse 7 herabgeschwenkt werden, so dass sie die in Fig. 1 gezeigte herabhängende Schutzstellung gegenüber Wind und Wetter einnehmen.

Es versteht sich, dass anstelle des zweiten Elektromotors 29 des Drehtellerantriebs auch der erste Elektromotor 26 für des Schwenkplattenantriebs für das wahlweise Antreiben der Fächerwelle 18 mitverwendet werden kann, in welchem Fall eine gleichartige Kupplung zwischen der Schwenkplatte 16 bzw. deren Antrieb 26 und der Fächerwelle 18 vorgesehen wird.

Wenn die Kupplung 41, 42 der Fächerwelle 18 in einer von der Ruhestellung (Fig. 8 bzw. 10) abweichenden Stellung gelöst ist, kann eine weitere Kupplung dazu verwendet werden, um die Fächerwelle 18 gegenüber der Schwenkplatte 16 temporär drehzufixieren, damit eine unbeabsichtigte Änderung der Ein- bzw. Auffächerstellung der Solarpaneele 2 insbesondere während deren Azimut- und Elevationsverstellung vermieden wird. Die weitere Kupplung umfasst in der Ausführungsvariante der Fig. 8 und 9 eine mit der Fächerwelle 18 drehfest verbundene und gegen eine Bremsfläche 43 der Schwenkplatte 16 mittels einer Feder 44 vorgespannte Bremsscheibe 45. Die Bremsscheibe 45 wird beim Verschwenken der Schwenkplatte 16 in die Ruhestellung durch ein am Drehteller 12 angebrachtes Betätigungsglied 46 von der Bremsfläche 43 abgehoben, siehe Fig. 8. Beim Hochschwenken der Schwenkplatte 16 gelangt das Betätigungsglied 46 außer Eingriff von der Bremsscheibe 45, so dass diese durch die Feder 44 gegen die Bremsfläche 43 gedrückt wird und damit die Fächerwelle 18 bezüglich der Schwenkplatte 16 drehfixiert. Die weitere Kupplung 43 - 46 ist somit in der Ruhestellung der Schwenkplatte 16 geöffnet und in einer davon abweichenden Schwenkstellung der Schwenkplatte 16 geschlossen.

Anstelle der gezeigten Bremsscheiben/Bremsflächen-Konstruktion der Kupplung 43 - 46 kann auch jede andere Art von Kupplung verwendet werden, welche die gezeigte temporäre Festsetzung der Fächerwelle 18 ermöglicht.

Beispielsweise kann gemäß der in den Fig. 10 und 11 dargestellten Variante die Bremsfunktion der weiteren Kupplung alternativ durch ein Bremsritzel 47 oder dgl. mit Bremszähnen 48 erzielt werden, welches in der Stellung von Fig. 10 etwa in Flucht mit der Getriebewelle 35 an der Schwenkplatte 16 drehfest, aber axialbeweglich, d.h. in der Darstellung von Fig. 10 vertikalbeweglich, mittels einer Feder 49 nach unten belastet gelagert ist. Beim Hochschwenken der Schwenkplatte 16 (Fig. 11) wird dieses Bremsritzel 47 mit seinen Bremszähnen 48 federbeaufschlagt in kämmenden Eingriff mit dem Zahnkranz 42 gedrückt, um diesen drehzufixieren. In der Ruhestellung der Schwenkplatte 16 (Fig. 10) wird es von der Getriebewelle 35 gegen seine Federbeaufschlagung aus dem kämmenden Eingriff geschoben und gibt so den Zahnkranz 42 frei.

Es versteht sich, dass die Kupplungen 41, 42 und 43 - 49 auch manuell oder mittels elektrischer Stellglieder betätigt werden könnten, welche z.B. von einer auch die Elektromotoren 26 und 29 entsprechend steuernden Elektronik gesteuert werden können.

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Schwenk- und Fächerantrieb (3) für Solarpaneele (2), mit:
einem Grundträger (9),
einem Drehteller (12), der auf dem Grundträger (9) um eine im Wesentlichen vertikale erste Achse (6) schwenkbar gelagert ist,
einer Schwenkplatte (16), die um eine im Wesentlichen horizontale zweite Achse (7) schwenkbar gelagert ist,
einer Fächerwelle (18), die auf der Schwenkplatte (16) um eine dritte Achse (5) schwenkbar gelagert ist und an der die Solarpaneele (2) um die genannte dritte Achse (5) ein- und auffächerbar lagerbar sind, **dadurch gekennzeichnet, dass**
ein Antrieb (29 - 31) zum Antreiben des Drehtellers (12) zur Drehung um die erste Achse (6) und zum selektiven Antreiben der Fächerwelle (18) zum Ein- oder Auffächern der Solarpaneele (2) um die dritte Achse (5) aufgrund der Drehung des Drehtellers (12) um die erste Achse (6) vorgesehen ist,
wobei die Fächerwelle (18) über eine Kupplung (41, 42) vom Drehteller (12) oder von dem Antrieb (29 - 31) des Drehtellers (12) antreibbar ist.

2. Schwenk- und Fächerantrieb nach Anspruch 1, bei welchem die Schwenkplatte (16) um die im Wesentlichen horizontale zweite Achse (7) zwischen einer horizontalen und einer vertikalen Position verschwenkbar ist.

3. Schwenk- und Fächerantrieb (3) nach Anspruch 1 oder 2, bei welchem die Schwenkplatte (16) an dem Drehteller (12) um die im Wesentlichen horizontale zweite Achse (7) schwenkbar gelagert ist, vorzugsweise zwischen einer Ruhestellung, in der die Schwenkplatte (16) im Wesentlichen parallel zu und über dem Drehteller (12) liegt, und einer etwa vertikalen Endstellung, in der Kurbel (20) und Pleuel (23) im Wesentlichen gestreckt sind.

4. Schwenk- und Fächerantrieb (3) nach einem der vorangehenden Ansprüche, weiter mit:
zumindest einer Kurbel (20), die relativ zum Drehteller (12) schwenkbar angebracht ist, und
einem Pleuel (23), das zwischen der Kurbel (20) und der Schwenkplatte (16) so gekoppelt ist, dass eine Schwenkbewegung der zumindest einen Kurbel (20) die Schwenkplatte (16) um die im Wesentlichen horizontale zweite Achse (7) herum verschwenkt.

5. Schwenk- und Fächerantrieb (3) nach Anspruch 4, bei welchem der Drehteller (12) ein Ende (15) der Schwenkplatte (16) um die genannte zweite Achse (7) lagert und in einem Abstand dazu die zumindest eine Kurbel (20) lagert, welche über das Pleuel (23) mit dem anderen Ende (24) der Schwenkplatte (16) zur Bildung eines Kurbelschwingengetriebes gekoppelt ist.

6. Schwenk- und Fächerantrieb nach Anspruch 4 oder 5, bei welchem die Kurbel(n) (20) über ein erstes Getriebe, z.B. ein erstes Schneckengetriebe (28), von einem am Drehteller (12) montierten ersten Antrieb wie z.B. einem ersten Elektromotor (26, 27) antreibbar ist/sind.

7. Schwenk- und Fächerantrieb nach einem der vorangehenden Ansprüche, bei welchem der Drehteller (12) über ein zweites Getriebe, z.B. ein zweites Schneckengetriebe (31), von einem an dem Grundträger (9) montierten zweiten Antrieb wie z.B. einem zweiten Elektromotor (29, 30) antreibbar ist.

8. Schwenk- und Fächerantrieb nach einem der vorangehenden Ansprüche, bei welchem die Kupplung (41, 42) durch das Verschwenken der Schwenkplatte (16) betätigbar ist.

9. Schwenk- und Fächerantrieb nach Anspruch 8, bei welchem die Kupplung (41, 42) in einer Ruhestellung der Schwenkplatte (16) geschlossen und in einer davon abweichenden Schwenkstellung der Schwenkplatte (16) geöffnet ist.

10. Schwenk- und Fächerantrieb nach Anspruch 9, bei welchem die Kupplung (41, 42) durch ein vom Drehteller (12) über eine Getriebewelle (35) angetriebenes Ritzel (41) und einen auf der Fächerwelle (18) sitzenden Zahnkranz (42) gebildet ist, welcher beim Einschwenken der Schwenkplatte (16) in die Ruhestellung in Eingriff mit dem Ritzel (41) und beim Ausschwenken der Schwenkplatte (16) aus der Ruhestellung außer Eingriff kommt.

11. Schwenk- und Fächerantrieb nach einem der Ansprüche 8 bis 10, bei welchem die Fächerwelle (18) über eine weitere Kupplung (43 - 49) gegenüber der Schwenkplatte (16) drehfixierbar ist.

12. Schwenk- und Fächerantrieb nach Anspruch 11, bei welchem die weitere Kupplung (43 - 49) in einer Ruhestellung der Schwenkplatte (16) geöffnet und in einer davon abweichenden Schwenkstellung der Schwenkplatte (16) geschlossen ist.

13. Schwenk- und Fächerantrieb nach Anspruch 12, bei welchem die weitere Kupplung eine mit der Fächerwelle (18) drehfeste und gegen eine Bremsfläche (43) der Schwenkplatte (16) federnd vorgespannte Bremsscheibe (45) ist, welche von einem Betätigungsglied (46) des Drehtellers (12) beim Verschwenken der Schwenkplatte (16) in die Ruhestellung von der Bremsfläche (43) distanzierbar ist.

14. Schwenk- und Fächerantrieb nach den Ansprüchen 10 und 12, bei welchem die weitere Kupplung ein an der Schwenkplatte (16) drehfest, aber axialbeweglich federbeaufschlagtes Bremsritzel (47) ist, welches Bremszähne (48) zum kämmenden Eingriff mit dem Zahnkranz (42) hat und beim Verschwenken der Schwenkplatte (16) in die Ruhestellung gegen die Federbeaufschlagung aus dem kämmenden Eingriff drückbar ist.

## Claims

1. Swivel and fan drive (3) for solar panels (2), comprising:
a basic carrier (9),
a turntable (12), which is pivotably mounted on the basic carrier (9) about a substantially vertical first axis (6),
a swivel plate (16), which is pivotably mounted about a substantially horizontal second axis (7),
a fan shaft (18), which is pivotably mounted on the swivel plate (16) about a third axis (5) and on which the solar panels (2) can be mounted so as to be fanned in and out about said third axis (5), **characterised in that**
a drive (29 - 31) is provided for driving the turntable (12) for rotation about the first axis (6) and for selectively driving the fan shaft (18) fanning the solar panels (2) in or out about the third axis (5) due to the rotation of the turntable (12) about the first axis (6),
wherein the fan shaft (18) can be driven by the turntable (12) or by the drive (29 - 31) of the turntable (12) via a coupling (41, 42).

2. Swivel and fan drive according to claim 1, in which the swivel plate (16) can be pivoted about the substantially horizontal second axis (7) between a horizontal and a vertical position.

3. Swivel and fan drive (3) according to claim 1 or 2, in which the swivel plate (16) is pivotably mounted on the turntable (12) about the substantially horizontal second axis (7), preferably between a rest position in which the swivel plate (16) extends substantially parallel to and above the turntable (12), and an approximately vertical end position in which the crank (20) and the connecting rod (23) are substantially extended.

4. Swivel and fan drive (3) according to any one of the preceding claims, further comprising:
at least one crank (20), which is pivotably attached relative to the turntable (12), and
a connecting rod (23) which is coupled between the crank (20) and the swivel plate (16) such that a pivoting movement of the at least one crank (20) pivots the swivel plate (16) about the substantially horizontal second axis (7).

5. Swivel and fan drive (3) according to claim 4, in which the turntable (12) mounts an end (15) of the swivel plate (16) about the said second axis (7), and mounts, at a distance therefrom, the at least one crank (20), which is coupled via the connecting rod (23) to the other end (24) of the swivel plate (16) to form a crank rocker gear.

6. Swivel and fan drive according to claim 4 or 5, in which the crank(s) (20) can be driven via a first gear, e.g. a first worm gear (28) by a first drive mounted on the turntable (12) such as e.g. a first electric motor (26, 27).

7. Swivel and fan drive according to any one of the preceding claims, in which the turntable (12) can be driven via a second gear, e.g. a second worm gear (31), by a second drive mounted on the basic carrier (9) such as e.g. a second electric motor (29, 30).

8. Swivel and fan drive according to any one of the preceding claims, in which the coupling (41, 42) can be actuated by swivelling the swivel plate (16).

9. Swivel and fan drive according to claim 8, in which the coupling (41, 42) is closed in a rest position of the swivel plate (16) and is open in a swivel position of the swivel plate (16) deviating therefrom.

10. Swivel and fan drive according to claim 9, in which the coupling (41, 42) is formed by a pinion (41) driven by the turntable (12) via a gear shaft (35) and a toothed ring (42) which sits on the fan shaft (18) and which engages with the pinion (41) when the swivel plate (16) is pivoted into the rest position and disengages when the swivel plate (16) is pivoted out of the rest position.

11. Swivel and fan drive according to any one of claims 8 to 10, in which the fan shaft (18) can be fixed in rotation with respect to the swivel plate (16) via a further coupling (43 - 49).

12. Swivel and fan drive according to claim 11, in which the further coupling (43 - 49) is opened in a rest position of the swivel plate (16) and is closed in a swivel position of the swivel plate (16) deviating therefrom.

13. Swivel and fan drive according to claim 12, in which the further coupling is a brake disk (45) that is rotationally fixed to the fan shaft (18) and is spring-biased against a brake surface (43) of the swivel plate (16), the brake disk (45) being displaceable from the brake surface (43) by an actuating member (46) of the turntable (12) when the swivel plate (16) is pivoted into the rest position.

14. Swivel and fan drive according to claims 10 and 12, in which the further coupling is a brake pinion (47) that is rotationally fixed but axially displaceable and spring-biased on the swivel plate (16), the brake pinion (47) comprising brake teeth (48) configured for meshing engagement with the toothed ring (42), and being adapted to be displaced out of the meshing engagement against the spring force when the swivel plate (16) is pivoted into the rest position.

## Revendications

1. Entraînement à pivotement et déploiement (3) pour des panneaux solaires (2), avec :
un support de base (9),
un plateau rotatif (12), qui est monté sur le support de base (9) de manière à pouvoir pivoter autour d'un premier axe (6) sensiblement vertical,
une plaque de pivotement (16), qui est montée de manière à pouvoir pivoter autour d'un deuxième axe (7) sensiblement horizontal,
un arbre de déploiement (18), qui est monté sur la plaque de pivotement (16) de manière à pouvoir pivoter autour d'un troisième axe (5) et sur lequel les panneaux solaires (2) peuvent être montés de manière à pouvoir se déployer et se refermer autour dudit troisième axe (5), **caractérisé en ce que**
un entraînement (29 - 31) est prévu pour entraîner le plateau rotatif (12) pour la rotation autour du premier axe (6) et pour entraîner sélectivement l'arbre de déploiement (18) pour refermer ou déployer les panneaux solaires (2) autour du troisième axe (5) en raison de la rotation du plateau rotatif (12) autour du premier axe (6),
dans lequel l'arbre de déploiement (18) peut être entraîné par un accouplement (41, 42) du plateau rotatif (12) ou de l'entraînement (29 - 31) du plateau rotatif (12).

2. Entraînement à pivotement et déploiement selon la revendication 1, dans lequel la plaque de pivotement (16) peut pivoter autour du deuxième axe (7) sensiblement horizontal entre une position horizontale et une position verticale.

3. Entraînement à pivotement et déploiement (3) selon la revendication 1 ou 2, dans lequel la plaque de pivotement (16) est montée de manière à pouvoir pivoter sur le plateau rotatif (12) autour du deuxième axe (7) sensiblement horizontal, de préférence entre une position de repos, dans laquelle la plaque de pivotement (16) est sensiblement parallèle au plateau rotatif (12) et se situe au-dessus de celui-ci, et une position finale sensiblement verticale, dans laquelle la manivelle (20) et la bielle (23) sont sensiblement étirées.

4. Entraînement à pivotement et déploiement (3) selon l'une quelconque des revendications précédentes, par ailleurs avec :
au moins une manivelle (20), qui est installée de manière à pouvoir pivoter par rapport au plateau rotatif (12), et
une bielle (23), qui est couplée entre la manivelle (20) et la plaque de pivotement (16) de sorte qu'un mouvement de pivotement de l'au moins une manivelle (20) fait pivoter la plaque de pivotement (16) autour du deuxième axe (7) sensiblement horizontal.

5. Entraînement à pivotement et déploiement (3) selon la revendication 4, dans lequel le plateau rotatif (12) supporte une extrémité (15) de la plaque de pivotement (16) autour dudit deuxième axe (7) et supporte à une distance de celui-ci l'au moins une manivelle (20), qui est couplée par la bielle (23) à l'autre extrémité (24) de la plaque de pivotement (16) pour former une transmission à manivelle oscillante.

6. Entraînement à pivotement et déploiement selon la revendication 4 ou 5, dans lequel la (les) manivelle(s) (20) peut (peuvent) être entraînée(s) par un premier entraînement monté sur le plateau rotatif (12), tel qu'un premier moteur électrique (26, 27), par l'intermédiaire d'une première transmission, par exemple une première transmission à vis sans fin (28).

7. Entraînement à pivotement et déploiement selon l'une quelconque des revendications précédentes, dans lequel le plateau rotatif (12) peut être entraîné par un deuxième entraînement monté sur le support de base (9) tel qu'un deuxième moteur électrique (29, 30) par l'intermédiaire d'une deuxième transmission, par exemple une deuxième transmission à vis sans fin (31).

8. Entraînement à pivotement et déploiement selon l'une quelconque des revendications précédentes, dans lequel l'accouplement (41, 42) peut être actionné par le pivotement de la plaque de pivotement (16).

9. Entraînement à pivotement et déploiement selon la revendication 8, dans lequel l'accouplement (41, 42) est fermé dans une position de repos de la plaque de pivotement (16) et est ouvert dans une position de pivotement différente de celle de la plaque de pivotement (16).

10. Entraînement à pivotement et déploiement selon la revendication 9, dans lequel l'accouplement (41, 42) est formé par un pignon (41) entraîné par le plateau rotatif (12) par l'intermédiaire d'un arbre de transmission (35) et une couronne dentée (42) reposant sur l'arbre de déploiement (18), qui vient en prise avec le pignon (41) lors du pivotement de la plaque de pivotement (16) vers l'intérieur dans la position de repos et vient hors prise lors du pivotement de la plaque de pivotement (16) hors de la position de repos.

11. Entraînement à pivotement et déploiement selon l'une quelconque des revendications 8 à 10, dans lequel l'arbre de déploiement (18) peut être fixé en rotation par un autre accouplement (43 - 49) par rapport à la plaque de pivotement (16).

12. Entraînement à pivotement et déploiement selon la revendication 11, dans lequel l'autre accouplement (43 - 49) est ouvert dans une position de repos de la plaque de pivotement (16) et est fermé dans une position de pivotement différente de celle de la plaque de pivotement (16).

13. Entraînement à pivotement et déploiement selon la revendication 12, dans lequel l'autre accouplement est un disque de frein (45) résistant à la rotation avec l'arbre de déploiement (18) et précontraint par ressort contre une surface de freinage (43) de la plaque de pivotement (16), lequel peut être éloigné de la surface de freinage (43) par un maillon d'actionnement (46) du plateau rotatif (12) lors du pivotement de la plaque de pivotement (16) dans la position de repos.

14. Entraînement à pivotement et déploiement selon les revendications 10 et 12, dans lequel l'autre accouplement est un pignon de frein (47) solidaire en rotation sur la plaque de pivotement (16) contraint par un ressort de manière mobile axialement, qui a des dents de frein (48) pour la prise par engrènement avec la couronne dentée (42) et qui peut être poussé hors de la prise par engrènement lors du pivotement de la plaque de pivotement (16) dans la position de repos à l'encontre de l'action exercée par le ressort.
